# EUROPÄISCHE PATENTSCHRIFT

(11) **EP 0 570 652 B1**
(45) Veröffentlichungstag und Bekanntmachung des Hinweises auf die Patenterteilung: **03.04.1996**
(21) Anmeldenummer: 92810963.6
(22) Anmeldetag: 08.12.1992
(51) Int. Cl.: G02B 6/38, H01R 13/453

(54) **Steckverbindung für Lichtwellenleiter**
Connector for optical fibres
Connecteur pour fibres optiques

(30) Priorität: 20.05.1992 CH 1625/92
(43) Veröffentlichungstag der Anmeldung: 24.11.1993
(73) Patentinhaber: DIAMOND S.A., CH-6616 Losone-Locarno (CH)
(72) Erfinder: Marazzi, Silvio, CH-6654 Cavigliano (CH); De Marchi, Silverio, CH-6646 Contra (CH)
(74) Vertreter: Wenger, René

(56) Entgegenhaltungen:
- EP-A- 0 232 792
- EP-A- 0 462 907
- WO-A-85/04493
- GB-A- 2 112 173
- US-A- 4 775 327
- US-A- 4 913 514

## Beschreibung

Die Erfindung betrifft eine Steckverbindung für Lichtwellenleiter gemäss dem Oberbegriff von Anspruch 1. Im Gegensatz zu elektrischen Steckverbindungen können bei optischen Steckverbindungen bereits geringe Verschmutzungen zu einer Übertragungsdämpfung führen, da Glasfasern mit kleinsten Querschnitten stirnseitig aufeinander ausgerichtet werden müssen. Es wurden daher bereits Schutzvorrichtungen vorgesehen, mit deren Hilfe der Steckerstift beim nicht eingesteckten Stecker geschützt werden kann.

Bisher wurden derartige Schutzvorrichtungen jedoch nur an relativ massiven Steckverbindungen für den feldmässigen Einsatz vorgesehen. Die EP-A-22 000 zeigt beispielsweise eine Schutzvorrichtung für einen Stecker, welcher auch für Lichtwellenleiter verwendet werden könnte. Das Grundprinzip der Schutzvorrichtung besteht darin, dass die Steckerstifte durch zwei übereinanderliegende Scheiben verdeckt sind. Die Scheiben sind auf einer gemeinsamen Achse relativ zueinander verdrehbar und mit Öffnungen versehen, welche in wenigstens einer Relativlage deckungsgleich übereinander liegen und auf diese Weise die Steckerstifte freigeben. Die Steckerstifte können dann in einer achsparallelen Bewegung durch die Öffnungen hindurch ausgefahren und in die Steckerbuchsen gesteckt werden. Der Nachteil dieser Schutzvorrichtung besteht darin, dass sie sich nur für schwere Steckerteile mit einem bestimmten Aussendurchmesser eignet. Zum Einstecken des Steckerteils muss sowohl eine Drehbewegung, als auch eine lineare Schiebebewegung ausgeführt werden. Für kleine Steckerteile, wie sie beispielsweise in der Messtechnik, in der Nachrichtentechnik oder in der Unterhaltungselektronik immer mehr Anwendung finden, ist die bekannte Vorrichtung nicht geeignet.

Die Steckverbindung gemäss US-A-4,775,327 ist nach einem ähnlichen Prinzip aufgebaut, wie diejenige gemäss EP-A-22 000. Anstelle einer drehbaren Scheibe zum Schutz der Steckerstifte tritt jedoch eine linear verschiebbare, mit Öffnungen versehene Platte. Diese Platte wird beim Einschieben des Steckerteils in das Buchsenteil durch eine Führungskulisse bewegt, wobei die Steckerstifte freigegeben werden und durch die Öffnungen der Platte hindurch in die korrespondierenden Buchsen eindringen können. Auch diese bekannte Vorrichtung eignet sich nicht für kleinformatige und hochpräzise Stecker.

Durch die US-A-4,913,514 und durch die GB-A-2,112,173 sind ferner Schutzvorrichtungen an optischen Steckverbindungen bekannt geworden, welche als flexible Blende ausgebildet sind. Beim Zusammenstecken der Steckverbindung wird die Blende entweder zurückgezogen oder zur Seite geschoben. Die relativ dünnen Blenden aus flexiblem Material bieten jedoch keinen ausreichenden Schutz gegen mechanische Beeinflussung. Schon geringfügige Beschädigungen der Blenden beeinträchtigen oder verunmöglichen ihre Funktion. Ausserdem besteht bei der Handhabung der Stecker die Gefahr, dass die Blenden, beispielsweise durch Berührung unbeabsichtigt verschoben werden.

Es ist daher eine Aufgabe der Erfindung, eine Steckverbindung der eingangs genannten Art zu schaffen, die bei einfachstem konstruktivem Aufbau auch bei kleinformatigen Steckern den Steckerstift zuverlässig vor Verunreinigungen durch Staub, Fingerabdrücke, Spritzwasser usw. schützt und die zudem einfach zu handhaben ist. Diese Aufgabe wird erfindungsgemäss mit einer Steckverbindung gelöst, welche die Merkmale im Anspruchs 1 aufweist. Der beweglich am Steckerteil angeordnete Deckel ist ein einziges Bauteil, das durch eine einfache lineare Steckbewegung bewegt werden kann. Komplizierte Bewegungsabläufe zum Freilegen des Steckerstifts sind nicht erforderlich, sondern der Steckerstift wird unmittelbar im Verlauf der Einsteckbewegung freigelegt. Damit ist auch zuverlässig gewährleistet, dass der hochpräzise bearbeitete und relativ empfindliche Steckerstift erst freigegeben wird, wenn er sich bereits im schützenden Buchsenteil befindet. Damit wird unter anderem auch verhindert, dass beispielsweise aus dem Steckerstift austretendes Laserlicht unbeabsichtigt zu Augenschäden führen kann.

Der Deckel ist vorzugsweise schwenkbar am Steckerteil gelagert und er weist ein Führungsstück auf, wobei die Steuerbahn wenigstens eine Führungskulisse ist, welche zum Schwenken des Deckels mit dem Führungsstück zusammenwirkt. Durch diese Massnahme kann der Deckel mit einem äussert geringen Kraftaufwand bewegt werden, der praktisch nicht grösser ist, als die ohnehin erforderliche Einsteckkraft.

Alternativ kann der Deckel aber auch schwenkbar und verschiebbar am Steckerteil gelagert sein und er kann ein Führungsstück aufweisen, wobei die Steuerbahn wenigstens eine Führungsnut ist, welche zum Schwenken und Verschieben des Deckels mit dem Führungsstück zusammenwirkt. Diese kombinierte Schwenk-/Schiebebewegung des Deckels hat den Vorteil, dass der Deckel innerhalb des Buchsenteils platzsparend untergebracht werden kann. Anstelle einer Kreisbahn legt die Aussenkante des Deckels eine Kurvenbahn zurück, die wesentlich weniger Raum beansprucht.

Besonders einfach lässt sich die kombinierte Bewegung des Deckels realisieren, wenn das Führungsstück wenigstens ein Gelenkelement aufweist, das drehbar und verschiebbar in einen Führungsschlitz am Steckerteil eingreift und wenn es wenigstens ein Eingriffsglied aufweist, das bei geschlossenem Deckel in die Führungsnut am Buchsenteil eingreift. Gelenkelement und Eingriffsglied gewährleisten eine präzise Führung auch bei raschen Bewegungsabläufen. Das Führungsstück und die Führungsnut wirken vorteilhaft derart zusammen, dass der Deckel in der Öffnungsposition hinter die Ebene der Stirnseite des Steckerstifts zurückgezogen ist. Dies ermöglicht es, dass in ein Buchsenteil von beiden Seiten her die Stecker derart eingesteckt werden können, dass sich die geöffneten Deckel in der gleichen Ebene gegenüberliegen. Eine Verdrehung der Stecker um 180° zur Überlappung der Deckel ist nicht erforderlich.

Der Deckel ist in der Öffnungsposition relativ zur Schliessposition vorzugsweise etwa um 90° verschwenkt. In dieser Position benötigt er relativ wenig Platz im Buchsenteil. Dies gilt namentlich für flächig ausgebildete Deckel. Andere Winkellagen in der Öffnungsposition wären jedoch denkbar.

Der Deckel ist vorzugsweise unter Federvorspannung in die Schliessposition vorgespannt, so dass er bei ausgestecktem Steckerteil immer zuverlässig schliesst. Die Federvorspannung kann dabei auf ganz unterschiedliche Art und Weise erzeugt werden. Denkbar wäre eine auf der Schwenkachse gelagerte Schraubenfeder, ein Federbügel oder aber auch eine Lagerpfanne, welche derart ausgebildet ist, dass sie infolge der Materialelastizität eine Federwirkung in eine bestimmte Richtung ausübt.

Der Deckel kann auch mit einem Federnocken in die Schliessposition vorgespannt sein, der sich federnd gegen die Stirnseite und/oder gegen die Längsseite des Steckerteils presst. Ein derartiger Federnocken hat den Vorteil, dass er einstückig mit dem Deckel ausgebildet werden kann und dass daher für die Federvorspannung keine zusätzlichen Teile erforderlich sind.

Der Deckel kann im wesentlichen scheibenförmig ausgebildet oder aber auch bogenförmig gekrümmt sein. Im letzteren Fall ist es möglich, dass er auf einer Bogenbahn verschiebbar am Steckerteil gelagert ist.

Der Deckel kann sich entweder unmittelbar gegen die Stirnseite des Steckerstifts pressen oder er kann gegen ein den Steckerstift umgebendes Endteil pressbar sein. Besonders vorteilhaft ist die der Steckerstirnseite zugewandte Innenseite des Deckels wenigstens im Bereich des Steckerstifts derart relativ zur optischen Achse des Lichtwellenleiters im Steckerstift angeschrägt, dass eine Rückkoppelung von Licht in den Lichtwellenleiter verhindert wird.

In der Regel wird die Steuerbahn aus Platzgründen vorzugsweise am Buchsenteil angeordnet sein. In bestimmten Fällen wäre aber auch die kinematische Umkehr dieses Prinzips ohne weiteres denkbar, so dass die Steuerbahn, beispielsweise eine Führungsnut oder eine Führungskulisse, am Deckel angeordnet ist, während am Buchsenteil ein Steuerelement, beispielsweise in der Form eines Steuernockens vorgesehen ist.

Weitere Vorteile und Einzelmerkmale der Erfindung ergeben sich aus der nachfolgenden Beschreibung von Ausführungsbeispielen und aus den Zeichnungen. Es zeigen:
- Figur 1: ein Steckerteil in perspektivischer Darstellung,
- Figur 2: ein Buchsenteil für die Aufnahme des Steckerteils gemäss Figur 1,
- Figur 3: das Steckerteil gemäss Figur 1 im eingesteckten Zustand, jedoch ohne Buchse,
- Figur 4: einen Querschnitt durch das Buchsenteil gemäss Figur 2 mit beidseitig eingesteckten Steckerteilen,
- Figur 5: eine schematische Prinzipdarstellung der Steckverbindung gemäss den Figuren 1 bis 3,
- Figur 6: eine schematische Darstellung einer alternativen Steckverbindung,
- Figur 7: ein alternatives Ausführungsbeispiel eines Steckerteils mit schwenkbarem und verschiebbarem Deckel in perspektivischer Darstellung bei geschlossenem Dekkel,
- Figur 8: das Steckerteil gemäss Figur 7 bei geöffnetem Dekkel,
- Figur 9: eine Steckverbindung mit vereinzelt dargestellten Bauteilen für das Steckerteil gemäss Figur 7,
- Figur 10: die Steckverbindung gemäss Figur 9 im zusammengebauten Zustand, bzw. beim Einschieben eines Stekkerteils,
- Figur 11: einen Querschnitt durch die Ebene I-I gemäss Figur 10 in vergrössertem Massstab, und
- Figur 12: einen Querschnitt durch die Ebene II-II gemäss Figur 10 in vergrössertem Massstab.

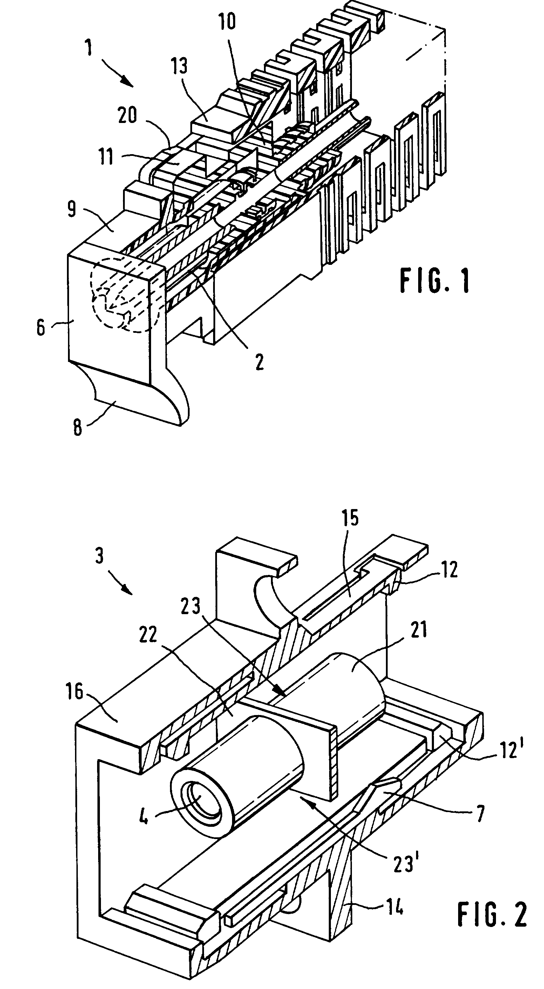

In Figur 1 ist ein Steckerteil 1 dargestellt, dessen Steckergehäuse 13 einen im wesentlichen etwa rechteckigen Querschnitt aufweist. Der Steckerstift 2 ist in einer Stifthalterung 10 gehalten, welche ein Endteil 9 aufweist, das eine Bohrung aufweist, deren Innenwand den Steckerstift umgibt. Das eigentliche Steckergehäuse 13 ist auf der Stifthalterung 10 um eine kleine Strecke axial verschiebbar gelagert. An der Stifthalterung ist auf zwei sich gegenüberliegenden Seiten je eine Sperrleiste 11 angeordnet, welche etwa auf der gleichen Höhe liegt wie eine zum Steckergehäuse 13 gehörende Rampe 20.

An der Stirnseite des Endteils 9 ist verschwenkbar ein Deckel 6 gelagert, der etwa die gleiche Querschnittsfläche hat wie das Endteil 9. Auf einer Seite ist am Deckel 6 ein Führungsstück 8 angeordnet. Das Führungsstück hat hier eine etwa nasenartige Konfiguration.

Figur 2 zeigt ein Buchsenteil 3 zur Aufnahme des Steckerteils 1. Das Buchsenteil hat im wesentlichen ein hohlkastenförmiges Buchsengehäuse 16, das mit einem Flansch 14 zur Befestigung an einer Gehäusewand versehen ist. Im innern des Buchsengehäuses ist die eigentliche Buchse 4 zur Aufnahme des Steckerstifts bzw. der Steckerstifte in einer Buchsenhalterung 21 gehalten. Vorzugsweise ist die Buchse schwimmend in der Buchsenhalterung gehalten. Am Buchsengehäuse 16 sind federnde Zungen 15 angeordnet, an deren Ende eine Sperrklinke 12 sitzt. Auf einer Innenseite des Buchsengehäuses ist eine Steuerbahn vorgesehen, welche hier die Form von parallelen Führungskulissen 7 aufweist.

Die Buchsenhalterung 21 wird im Buchsengehäuse 16 mit Hilfe einer Haltewand 22 festgehalten. Die Haltewand ist so dimensioniert, dass sie oben und unten je eine Oeffnung 23, 23' freilässt, welche sich über die ganze Breite erstreckt. Diese Oeffnungen dienen dazu, den aufgeklappten Deckel 6 eines eingeschobenen Steckerteils 1 aufzunehmen, wie anschliessend noch beschrieben wird.

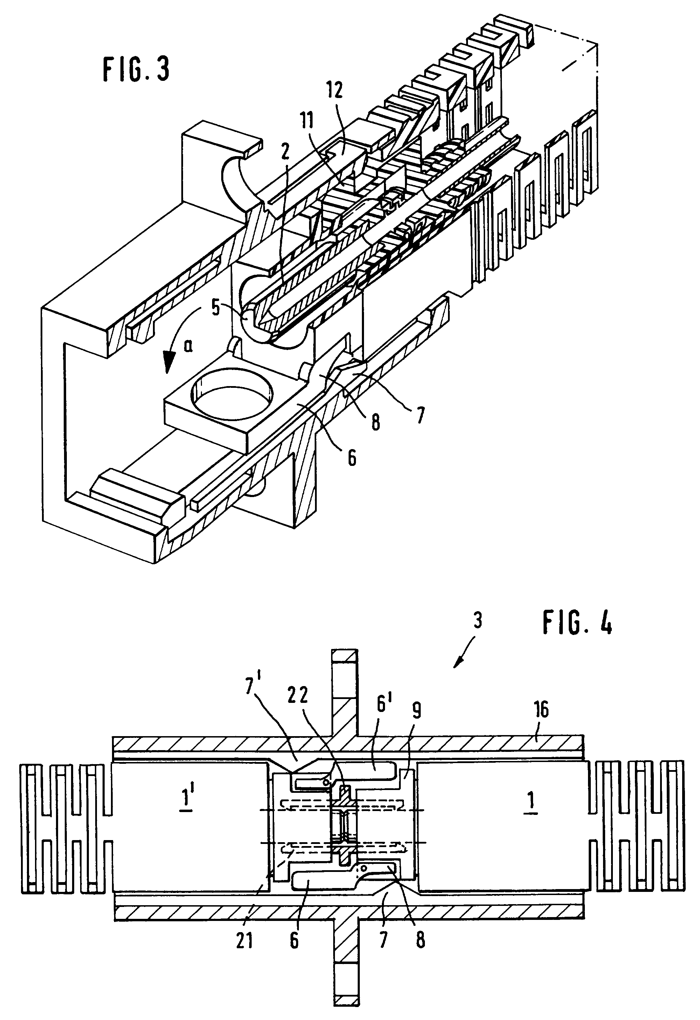

Die Steckverbindung mit eingestecktem Steckerteil ist in Figur 3 ersichtlich. Beim Einführen des Steckerteils stösst das Führungsstück 8 des Deckels 6 auf die Führungskulisse 7, wobei der Deckel 6 in Pfeilrichtung a umgeklappt wird. Aus Gründen der besseren Übersichtlichkeit ist in Figur 3 die eigentliche Steckerbuchse 4 nicht dargestellt. Der Steckerstift 2 dringt jedoch im Verlauf der Einsteckbewegung in die Steckerbuchse 4 ein, in welcher seine Stirnseite 5 mit der Stirnseite eines benachbarten Steckerstifts zusammentrifft.

Beim Erreichen der erforderlichen Einstecktiefe rastet die Sperrklinke 12 hinter die Sperrleiste 11 ein, wodurch das Steckerteil im Buchsenteil gesichert ist. Beim dargestellten Ausführungsbeispiel handelt es sich um eine sogenannte Push-and-Pull-Verriegelung. Diese Einrastvorrichtung kann nur gelöst werden, wenn die Zugkraft zum Herausziehen des Steckerteils am Steckergehäuse 13 angreift. Dabei gleitet das Steckergehäuse 13 relativ zur Stifthalterung 10 etwas zurück, wobei die Rampe 20 die Sperrklinke 12 anhebt, so dass die Sperrleiste 11 freigegeben wird (Fig. 1). Greift dagegen die Zugkraft am hier nicht dargestellten Kabel und damit an der Stifthalterung 10 an, so kann die Sperrklinke 12 nicht ausgerastet werden. Diese Art der Verriegelung an optischen Steckverbindungen ist an sich bereits bekannt. Selbstverständlich könnte die Fixierung des Steckerteils am Buchsenteil aber auch auf andere Weise, z.B. mit Hilfe einer Überwurfmutter erfolgen.

Beim Herausziehen des Steckerteils aus dem Buchsenteil muss das Führungsstück 8 wiederum über die Führungskulisse 7 gleiten, wobei der Deckel 6 wiederum zurückgeschwenkt wird. Der Deckel 6 ist vorzugsweise aus Kunststoffmaterial hergestellt und derart ausgebildet, dass er lediglich in das Endteil 9 eingerastet werden kann. Der Deckel 6 muss nicht unbedingt über die Führungskulisse zurückgeschwenkt werden. Es ist ohne weiteres denkbar, dass die Schliessbewegung nur durch Rückfederung mit Hilfe eines geeigneten Federelements erfolgt.

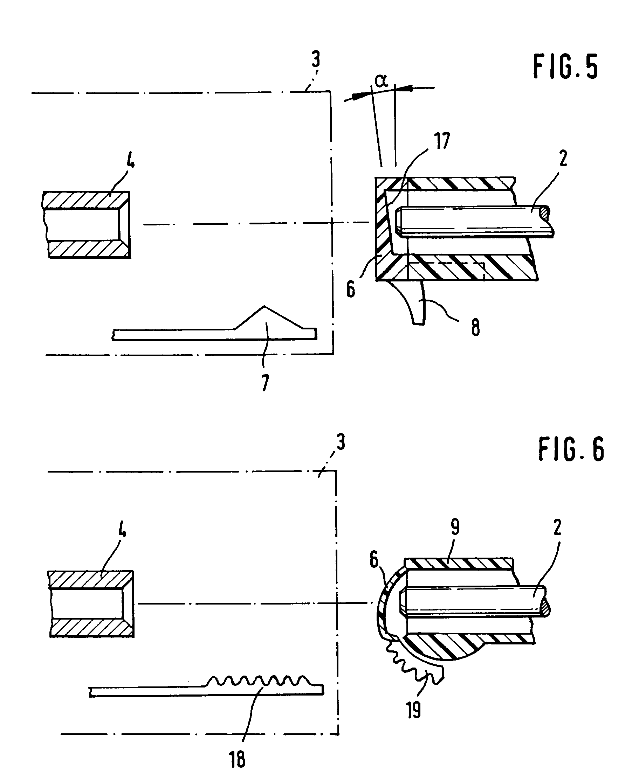

Figur 4 zeigt schematisch ein Buchsenteil 3 gemäss Figur 2, in welches von beiden Seiten ein Steckerteil 1, 1' eingesteckt ist. Wie aus dieser Figur ersichtlich ist, weist dieses Buchsenteil nicht nur ein Führungskulissenpaar 7 auf der Unterseite auf, sondern auch noch ein Führungskulissenpaar 7' auf der Oberseite, und zwar bezogen auf die Berührungsebene zwischen den beiden Steckerstiften symmetrisch versetzt angeordnet. Das Steckerteil 1' wird gegenüber dem Steckerteil 1 um 180° verdreht eingesteckt, wobei die Aussenkontur der Steckergehäuse und die Innenkontur des Buchsengehäuses so ausgebildet sind, dass die beiden Steckerteile nur in dieser Lage eingesteckt werden können. Die beiden Deckel 6 und 6' der Steckerteile 1 und 1' überlappen sich im eingesteckten Zustand und schieben sich durch die Oeffnungen 23 und 23' gemäss Figur 2. Selbstverständlich müssen jedoch in das Buchsenteil 3 nicht unbedingt zwei identische Steckerteile eingeschoben werden. Es wäre ohne weiteres denkbar, dass auf einer Seite ein Steckerteil ohne Deckel eingesteckt wird, beispielsweise wenn dieses Steckerteil auf der Innenseite eines Gehäuses liegt und praktisch nie entfernt werden muss.

Figur 5 zeigt nochmals schematisch einen Teil der Buchse 4 und der Führungskulisse 7 im Buchsenteil 3 sowie den Deckel 6 mit dem Führungsstück 8. Der Deckel ist kappenartig ausgebildet, wobei die Deckelinnenwand 17 relativ zur Steckerstirnseite unter einem Winkel α angeschrägt ist, um eine Rückkoppelung von Licht durch Spiegelung zu vermeiden. Der Winkel α kann beispielsweise etwa 7° betragen. Selbstverständlich muss die geometrische Beziehung zwischen der Buchse 4, der Führungskulisse 7 und dem Deckel 6 so gewählt werden, dass der Deckel 6 rechtzeitig vor dem Erreichen der Buchse 4 aufgeklappt wird. Der Deckel schiebt sich dann teilweise noch unter die Buchse 4.

Ein alternatives Ausführungsbeispiel der Erfindung ist schematisch in Figur 6 dargestellt. Die Steuerbahn besteht hier nicht aus einer Führungskulisse, sondern aus einem Zahnstangenabschnitt 18. Der Deckel 6 ist bogenförmig gekrümmt ausgebildet und auf einer Kreisbogenbahn verschiebbar am Endteil 9 gelagert, beispielsweise in seitlichen Nuten oder dergleichen. Anstelle eines Führungsstücks weist der Deckel ein Zahnsegment 19 auf, welches beim Einstecken des Steckerteils in das Buchsenteil mit dem Zahnstangenabschnitt 18 kämmt. Dabei wird der Deckel 6 aufgeschoben und der Steckerstift 2 wird freigelegt, bevor er die Buchse 4 erreicht.

Selbstverständlich kann der erfindungsgemässe Deckelverschluss nicht nur an Steckerteilen mit viereckigem Querschnitt realisiert werden. Auch Steckerteile mit rundem Querschnitt können auf gleiche oder auf ähnliche Weise mit einem beweglichen Deckel versehen werden, der dann ebenfalls im wesentlichen rund ausgebildet ist. Schliesslich braucht das Buchsenteil auch nicht unbedingt ein separates Bauteil zu sein. Es wäre denkbar, dass das Buchsenteil unmittelbar Bestandteil des einen Steckerteils ist.

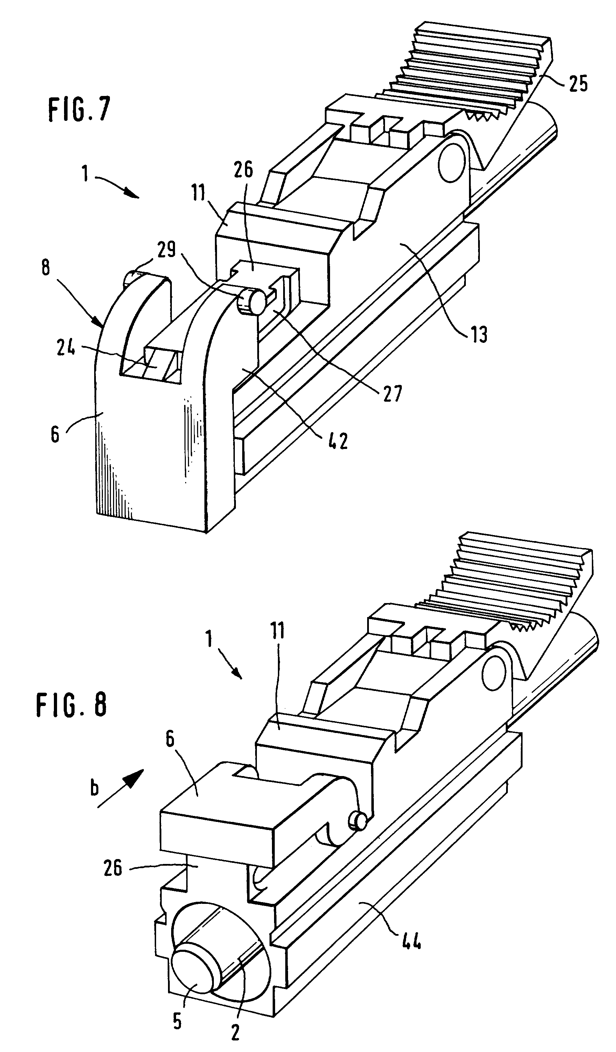

In den Figuren 7 bis 12 ist ein weiteres alternatives Ausführungsbeispiel der Erfindung dargestellt, bei dem der Deckel eine kombinierte Schwenk- und Schiebebewegung ausführt. Alternativ gelöst ist hier auch die Befestigung und Entriegelung des Steckerteils im Buchsenteil. Die gleichartigen Bauteile haben die gleichen Bezugszeichen wie bei den vorhergehenden Ausführungsbeispielen.

In den Figuren 7 und 8 ist zunächst ein Steckerteil 1 dargestellt, das im wesentlichen ebenfalls ein etwa rechteckiges Steckergehäuse 13 aufweist. Wie nachstehend noch ausgeführt wird, ist jedoch die Stifthalterung mit dem Steckerstift 2 nicht axial verschiebbar, sondern fest im Steckergehäuse gehalten. Das Steckergehäuse trägt jedoch ebenfalls eine Sperrleiste 11, an der es im Buchsenteil eingeklinkt werden kann. Zur Entriegelung dient ein Entriegelungshebel 25, dessen Funktion nachstehend noch etwas genauer erläutert wird.

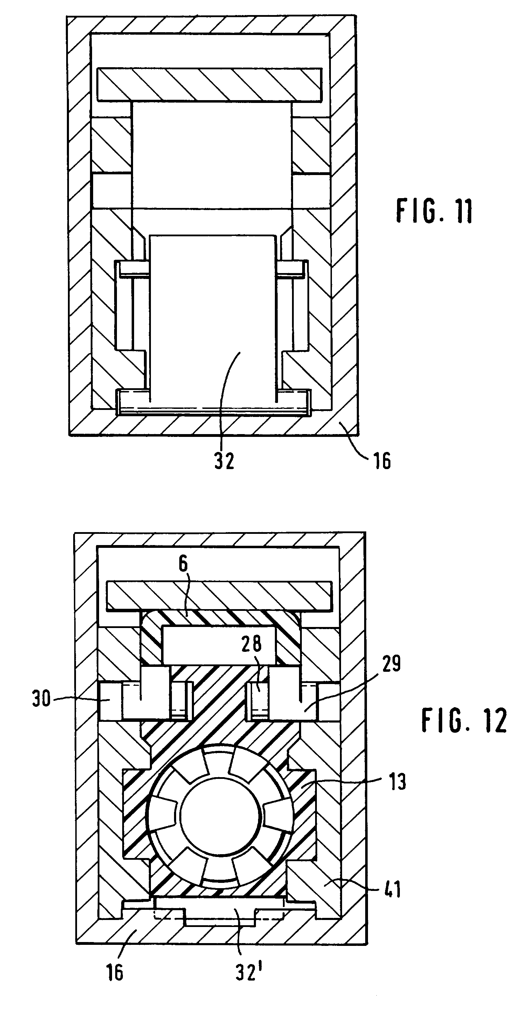

Der Deckel 6 weist ein Führungsstück 8 in der Form von 2 rechtwinklig zum Deckel 6 verlaufenden Flügeln auf. Auf der Innenseite dieser Flügel - in der Abbildung hier nicht sichtbar - sind Gelenknocken 28 (Figur 12) angeordnet, welche je in einen Führungsschlitz 27 an der Seitenwand einer prismatischen Führungsleiste 26 eingreifen. Die Schlitze 27 laufen im Bereich der Sperrleisten 11 nach oben aus, damit die Gelenknocken eingeführt werden können. Auf der Aussenseite der Flügel 42 sind im Abstand zu den Gelenknocken 28 Steuernocken 29 angeordnet. Diese Steuernocken dienen dazu, den Deckel 6 mit Hilfe von Führungsnuten 30 (Figur 12) im Buchsenteil zu bewegen.

Damit der Deckel 6 in der in Figur 7 dargestellten Schliessposition verbleibt, ist zwischen den Flügeln 42 ein Federnokken 24 angeordnet, der sich gegen die Stirnseite der Führungsleiste 26 presst.

Figur 8 zeigt das Steckerteil 1 bei geöffnetem Deckel 6. Diese Position nimmt der Deckel 6 normalerweise nur innerhalb des Buchsenteils ein. Selbstverständlich ist es jedoch möglich, den Deckel auch manuell aufzuklappen und zurückzuschieben. Der Deckel 6 führt dabei eine Schwenkbewegung um die Achsen der Gelenknocken 28 aus und gleichzeitig gleiten die Gelenknocken in den Führungsschlitzen 27 in Pfeilrichtung b nach hinten gegen die Sperrleiste 11. Der Deckel 6 wird dabei hinter die Ebene der Stirnseite 5 des Steckerstifts 2 zurückgezogen.

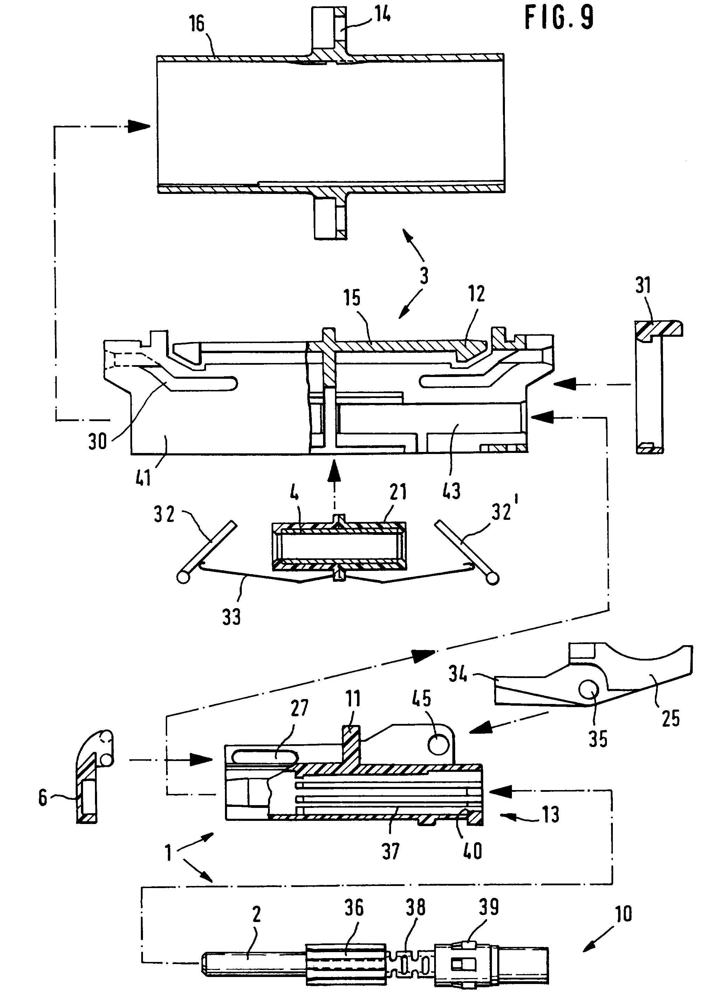

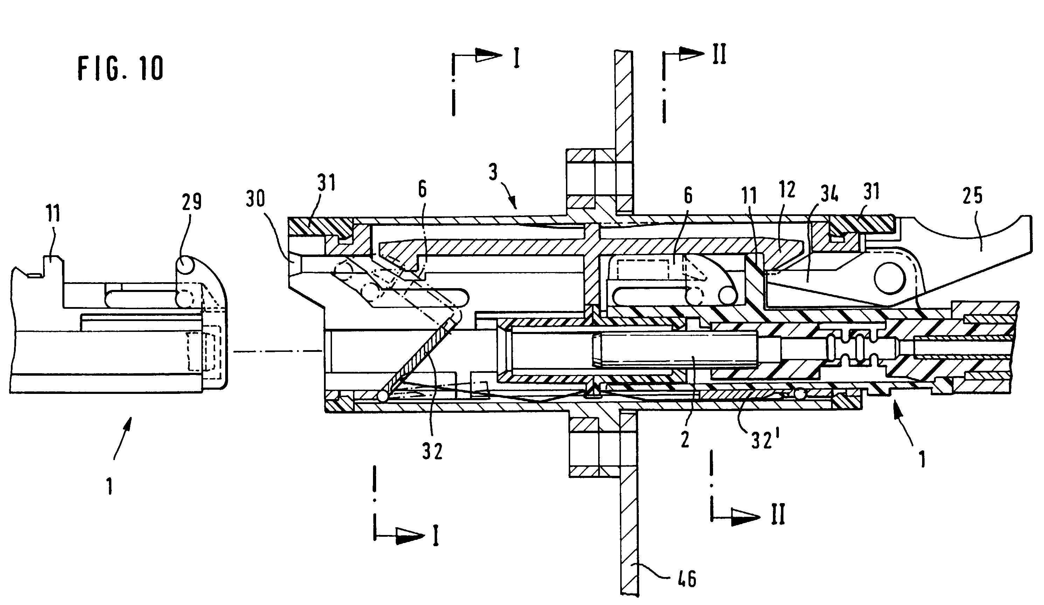

Figur 9 zeigt die Einzelteile einer Steckverbindung mit den Einzelbauteilen und Figur 10 zeigt einen Querschnitt durch eine deraritige Steckverbindung. Das Buchsenteil 3 ist zweiteilig aufgebaut und besteht aus dem äusseren Buchsengehäuse 16 mit dem Flansch 14 und aus dem inneren Buchsengehäuse 41. Wie insbesondere aus den Figuren 11 und 12 ersichtlich ist, hat auch das Buchsenteil einen im wesentlichen kastenförmigen Querschnitt. Das innere Buchsengehäuse 41 kann in das äussere Buchsengehäuse 16 eingeschoben werden, wobei es auf beiden Seiten mit einem aufschnappbaren Rahmen 31 gesichert wird. Das innere Buchsengehäuse 41 ist etwa symmetrisch aufgebaut und hat seitlich Führungsnuten 30 zur Aufnahme und Führung der Steuernocken 29 am Führungsstück des Deckels. Zum Festhalten und Sichern des Steckerteils ist je eine federnde Zunge 15 mit einer Sperrklinke 12 vorgesehen. Seitliche Nuten 43 an der Innenwand des inneren Buchsengehäuses 41 können die Seitenleisten 44 am Steckergehäuse 13 aufnehmen. Das Steckerteil kann auf diese Weise im Buchsenteil nicht verkantet werden.

Die Buchsenhalterung 21 mit der eigentlichen Buchse 4 für die Steckerstifte wird von unten her durch eine Öffnung in das innere Buchsengehäuse 41 eingeschoben. Nach dem Überschieben des äusseren Buchsengehäuses 16 ist die Buchsenhalterung 21 gesichert.

Unterhalb der Buchsenhalterung 21 ist auch eine zweiarmige Blattfeder 33 eingeklemmt, die mit ihren freien Enden eine Schutzklappe 32 vorspannt. Wie insbesondere aus Figur 11 ersichtlich ist, ist die Schutzklappe 32 zwischen dem inneren Buchsengehäuse 41 und dem äusseren Buchsengehäuse 16 gelenkig gelagert. Diese Schutzklappen verhindern, dass aus einem einseitig eingesteckten Stecker Licht, insbesondere Laserlicht austreten kann.

Das Steckerteil 1 besteht im wesentlichen aus dem Steckergehäuse 13, an welchem der Deckel 6 und der Entriegelungshebel 25 befestigt sind. Der Entriegelungshebel 25 ist mit seinen Gelenknocken 35 in Öffnungen 45 im Steckergehäuse 13 eingerastet. Ein Hebelarm 34 greift im eingesteckten Zustand unter die Sperrklinke 12 am Buchsenteil, so dass diese zur Entriegelung angehoben werden kann.

Wie insbesondere auch aus Figur 12 hervorgeht, ist die Innenseite des Steckergehäuses 13 teilweise als Keilnabe 37 ausgebildet. Die Stifthalterung 10 weist einen Abschnitt auf, der als Keilwelle 36 ausgebildet ist. Einzelne Keile 39 an einem hinteren Abschnitt der Stifthalterung rasten an den Schultern 40 der Keilnabe ein, so dass die Stifthalterung 10 in das Steckergehäuse 13 eingeprellt werden kann. Die Keilwellen-/Keilnabenverbindung dient dabei zur Festlegung der relativen Winkelposition des Steckerstifts. Bei sechs Einzelkeilen bzw. Keilnuten ergeben sich insgesamt sechs mögliche Winkelpositionen des Steckerstifts im Steckergehäuse 13. Bezogen auf die Mittelachse des Lichtwellenleiters wird jeweils durch einen Messvorgang die optimalste Position ausgewählt, so dass innerhalb einer Steckverbindung stets die günstigste Toleranzpaarung bezüglich der Exzentrizität des Lichtwellenleiters aufeinandertrifft.

Die Stifthalterung 10 ist vorzugsweise einstückig aus Kunststoffmaterial hergestellt und hat einen federnden Abschnitt 38, so dass der Steckerstift 2 relativ zum Steckergehäuse 13 axial abgefedert ist.

Figur 10 zeigt das Buchsenteil 3 im zusammengebauten Zustand, das beispielsweise an einer Gehäusewand 46 befestigt ist. Auf der rechten Seite ist bereits ein Steckerteil 1 eingesteckt und verriegelt, wobei der Deckel 6 achsparallel zwischen der Führungsleiste 26 des Steckergehäuses und der Zunge 15 des inneren Buchsengehäuses 41 angeordnet ist. Der Steckerstift 2 dringt in die Buchse 4 ein. In dieser Stellung ist auch die Schutzklappe 32 gegen die Kraft der Blattfeder 33 achsparallel nach unten gepresst.

Auf der linken Seite der Steckverbindung ist der vordere Abschnitt eines Steckerteils 1 dargestellt, das in die Steckverbindung eingeschoben wird. Der Deckel 6 ist dabei zunächst noch in seiner Schliessstellung. Beim Einschieben des Steckerteils 1 in das Buchsenteil 3 greifen die Steuernocken 29 in die Führungsnuten 30, was durch eine keilförmige Erweiterung etwas erleichtert wird. Die Führungsnuten 30 haben einnen Bahnverlauf, der zunächst achsparallel, dann schräg gegen die Mittelachse der Steckverbindung und dann wieder achsparallel verläuft. Im schrägen Abschnitt werden die Steuernocken 29 nach unten gepresst, womit die Schwenkbewegung des Deckels 6 eingeleitet wird. Mit strichpunktierten Linien ist eine Zwischenstellung des Deckels 6 in diesem schrägen Abschnitt angedeutet. Gleichzeitig wird die Bewegung des Deckels relativ zum Steckergehäuse 13 verzögert, so dass der Deckel 6 nach hinten gezogen wird. Selbstverständlich wird im Verlauf der Einsteckbewegung auch die Schutzklappe 32 kontinuierlich nach unten gepresst, bis sie ihre Endstellung einnimmt. Sobald das Steckerteil 1 seine Endposition erreicht hat, in welcher die Stirnseiten der sich gegenüberliegenden Steckerstifte aneinander anliegen, rastet die Sperrklinke 12 hinter der Sperrleiste 11 ein.

Zum Herausziehen eines Steckerteils aus dem Buchsenteil muss lediglich der Entriegelungshebel 25 nach unten gepresst werden, wobei über den Hebelarm 34 die Sperrklinke 12 angehoben wird und damit die Sperrleiste 11 freigibt. Selbstverständlich könnte hier aber auch eine andere Entriegelung des Steckerteils, beispielsweise mit dem bereits eingangs beschriebenen Push-and-Pull System realisiert werden.

## Patentansprüche

1. Steckverbindung für Lichtwellenleiter mit einem Steckerteil (1), das wenigstens einen Steckerstift (2) aufweist und mit einem Buchsenteil (3), das wenigstens eine Buchse (4) zur Aufnahme des Steckerstifts aufweist, wobei am Steckerteil eine Schutzvorrichtung zum Schutz der Stirnseite (5) des Steckerstifts angeordnet ist, welche aus einer Schliessposition mit verdeckter Stirnseite in eine Öffnungsposition mit freiliegender Stirnseite bewegbar ist, dadurch gekennzeichnet, dass die Schutzvorrichtung ein gelenkig am Steckerteil gelagerter Deckel ist, der ein Führungsstück (8) aufweist, das mit einer Steuerbahn im Buchsenteil (3) derart zusammenwirkt, dass der Deckel durch lineares Einschieben des Steckerteils in das Buchsenteil in die Öffnungsposition und durch das Herausziehen des Steckerteils aus dem Buchsenteil in die Schliessposition bewegt wird.

2. Steckverbindung nach Anspruch 1, dadurch gekennzeichnet, dass der Deckel (6) schwenkbar am Steckerteil (1) gelagert ist und dass die Steuerbahn wenigstens eine Führungskulisse (7) ist, welche zum Schwenken des Deckels mit dem Führungsstück (8) zusammenwirkt.

3. Steckverbindung nach Anspruch 1, dadurch gekennzeichnet, dass der Deckel (6) schwenkbar und verschiebbar am Stekkerteil gelagert ist und dass die Steuerbahn wenigstens eine Führungsnut (30) ist, welche zum Schwenken und Verschieben des Deckels mit dem Führungsstück zusammenwirkt.

4. Steckverbindung nach Anspruch 3, dadurch gekennzeichnet, dass das Führungsstück (8) wenigstens ein Gelenkelement (28) aufweist, das drehbar und verschiebbar in einen Führungsschlitz (27) am Steckerteil (1) eingreift und dass es wenigstens ein Eingriffsglied (29) aufweist, das bei geschlossenem Deckel (6) in die Führungsnut (30) am Buchsenteil (3) eingreift.

5. Steckverbindung nach Anspruch 3 oder Anspruch 4, dadurch gekennzeichnet, dass das Führungsstück (8) und die Führungsnut (30) derart zusammenwirken, dass der Deckel (6) in der Öffnungsposition hinter die Ebene der Stirnseite (5) des Steckerstifts (2) zurückgezogen ist.

6. Steckverbindung nach einem der Ansprüche 1 bis 5, dadurch gekennzeichnet, dass der Deckel (6) in der Öffnungsposition relativ zur Schliessposition etwa um 90° verschwenkt ist.

7. Steckverbindung nach einem der Ansprüche 1 bis 6, dadurch gekennzeichnet, dass der Deckel (6) unter Federvorspannung in die Schliessposition vorgespannt ist.

8. Steckverbindung nach Anspruch 7, dadurch gekennzeichnet, dass der Deckel (6) mit einem Federnocken (24) in die Schliessposition vorgespannt ist, der sich federnd gegen die Stirnseite und/oder gegen eine Längsseite des Stekkerteils presst.

9. Steckverbindung nach einem der Ansprüche 1 bis 8, dadurch gekennzeichnet, dass der Steckerstift aus einem Endteil (9) des Steckerteils herausragt und dass der Deckel als Kappe ausgebildet ist, die in der Schliessposition gegen die Stirnseite des Endteils pressbar ist.

10. Steckverbindung nach einem der Ansprüche 1 bis 9, dadurch gekennzeichnet, dass die der Steckerstirnseite (5) zugewandte Innenseite (17) des Deckels wenigstens im Bereich des Steckerstifts derart relativ zur optischen Achse des Lichtwellenleiters im Steckerstift (2) angeschrägt ist, dass eine Rückkoppelung von Licht in den Lichtwellenleiter verhindert wird.

11. Steckverbindung nach einem der Ansprüche 1 bis 10, dadurch gekennzeichnet, dass das Steckerteil ein Steckergehäuse (13) mit einem im wesentlichen rechteckigen Querschnitt aufweist.

12. Steckverbindung nach einem der Ansprüche 1 bis 11, dadurch gekennzeichnet, dass das Buchsenteil (3) ein an einer Gehäusewand montierbares Mittelteil ist, in das von beiden Seiten ein Steckerteil (1, 1') einschiebbar ist, und dass für jedes Steckerteil eine eigene Steuerbahn (7, 7') im Buchsenteil angeordnet ist.

13. Steckverbindung nach einem der Ansprüche 1 bis 12, dadurch gekennzeichnet, dass das Steckerteil (1) mittels einer Einrastvorrichtung (11, 12) am Buchsenteil (3) fixierbar ist.

## Claims

1. A plug connection for optical fibres comprising a plug member (1) which has at least one plug pin (2), and a socket member (3) which has at least one socket (4) for receiving the plug pin, wherein arranged on the plug member is a protection device for protecting the end (5) of the plug pin, the protection device being movable from a closed position with the end covered into an open position with the end exposed, characterised in that the protection device is a cover which is mounted hingedly on the plug member and which has a guide portion (8) which co-operates with a control track in the socket member (3) in such a way that the cover is moved into the open position by linear insertion of the plug member into the socket member and is moved into the closed position by the plug member being pulled out of the socket member.

2. A plug connection according to claim 1 characterised in that the cover (6) is mounted pivotably on the plug member (1) and that the control track is at least one guide slide (7) which co-operates with the guide portion (8) for pivoting the cover.

3. A plug connection according to claim 1 characterised in that the cover (6) is mounted pivotably and displaceably on the plug member and that the control track is at least one guide groove (30) which co-operates with the guide portion for pivoting and displacing the cover.

4. A plug connection according to claim 3 characterised in that the guide portion (8) has at least one hinge element (28) which rotatably and displaceably engages into a guide slot (27) on the plug member (1) and that it has at least one engagement member (29) which, when the cover (6) is closed, engages into the guide groove (30) on the socket member (3).

5. A plug connection according to claim 3 or claim 4 characterised in that the guide portion (8) and the guide groove (30) co-operate in such a way that the cover (6) is pulled back in the open position behind the plane of the end (5) of the plug pin (2).

6. A plug connection according to one of claims 1 to 5 characterised in that in the open position the cover (6) is pivoted approximately through 90° relative to the closed position.

7. A plug connection according to one of claims 1 to 6 characterised in that the cover (6) is biased into the closed position under a spring biasing force.

8. A plug connection according to claim 7 characterised in that the cover (6) is biased into the closed position with a spring projection (24) which presses resiliently against the end and/or against a longitudinal side of the plug member.

9. A plug connection according to one of claims 1 to 8 characterised in that the plug pin projects out of an end portion (9) of the plug member and that the cover is in the form of a cap which in the closed position can be pressed against the end of the end portion.

10. A plug connection according to one of claims 1 to 9 characterised in that the inside (17) of the cover, which is towards the end (5) of the plug, is bevelled at least in the region of the plug pin relative to the optical axis of the optical fibre in the plug pin (2) in such a way that light is prevented from being coupled back into the optical fibre.

11. A plug connection according to one of claims 1 to 10 characterised in that the plug member has a plug housing (13) of substantially rectangular cross-section.

12. A plug connection according to one of claims 1 to 11 characterised in that the socket member (3) is a central member which can be mounted on a housing wall and into which a plug member (1, 1') can be inserted from both sides, and that a respective control track (7, 7') is arranged in the socket member for each plug member.

13. A plug connection according to one of claims 1 to 12 characterised in that the plug member (1) can be fixed to the socket member (3) by means of a retaining engagment device (11, 12).

## Revendications

1. Connecteur pour fibres optiques, comprenant un élément formant fiche (1) pourvu d'au moins une broche (2), et un élément formant alvéole (3) pourvu d'au moins un alvéole (4) destiné à recevoir la broche, étant précisé qu'il est prévu sur l'élément formant fiche un dispositif de protection destiné à protéger le côté frontal (5) de la broche, qui est apte à être amené d'une position fermée dans laquelle le côté frontal est couvert, dans une position ouverte dans laquelle le côté frontal est dégagé, caractérisé en ce que le dispositif de protection consiste en un couvercle articulé sur l'élément formant fiche, qui comporte une pièce de guidage (8) coopérant avec une voie de commande dans l'élément formant alvéole (3) de telle sorte que le couvercle est amené dans la position ouverte grâce à une introduction linéaire de l'élément formant fiche dans l'élément formant alvéole, et dans la position fermée grâce à l'extraction de l'élément formant fiche de l'élément formant alvéole.

2. Connecteur selon la revendication 1, caractérisé en ce que le couvercle (6) est monté pivotant sur l'élément formant fiche (1), et en ce que la voie de commande consiste en au moins une glissière (7) qui coopère pour le pivotement du couvercle avec la pièce de guidage (8).

3. Connecteur selon la revendication 1, caractérisé en ce que le couvercle (6) est monté pivotant et coulissant sur l'élément formant fiche, et en ce que la voie de commande consiste en au moins une rainure de guidage (30) qui coopère pour le pivotement et le coulissement du couvercle avec la pièce de guidage.

4. Connecteur selon la revendication 3, caractérisé en ce que la pièce de guidage (8) comporte au moins un élément articulé (28) qui s'engage par pivotement et coulissement dans une fente de guidage (27) prévue sur l'élément formant fiche (1), et en ce qu'elle comporte au moins un organe d'engagement (29) qui, lorsque le couvercle (6) est fermé, s'engage dans la rainure de guidage (30) prévue sur l'élément formant alvéole (3).

5. Connecteur selon la revendication 3 ou 4, caractérisé en ce que la pièce de guidage (8) et la rainure de guidage (30) coopèrent de telle sorte que le couvercle (6), en position ouverte, est rétracté derrière le plan du côté frontal (5) de la broche (2).

6. Connecteur selon l'une des revendications 1 à 5, caractérisé en ce que le couvercle (6), en position ouverte, est tourné d'environ 90° par rapport à la position fermée.

7. Connecteur selon l'une des revendications 1 à 6, caractérisé en ce que le couvercle (6) est précontraint par ressort dans la position fermée.

8. Connecteur selon la revendication 7, caractérisé en ce que le couvercle (6) est précontraint dans la position fermée par une saillie élastique (24) qui se presse par ressort contre le côté frontal et/ou contre un côté longitudinal de l'élément formant fiche.

9. Connecteur selon l'une des revendications 1 à 8, caractérisé en ce que la broche dépasse d'une partie d'extrémité (9) de l'élément formant fiche, et en ce que le couvercle est conçu comme un capuchon qui est apte à être pressé, en position fermée, contre le côté frontal de ladite partie d'extrémité.

10. Connecteur selon l'une des revendications 1 à 9, caractérisé en ce que le côté intérieur (17) du couvercle qui est tourné vers le côté frontal (5) de la fiche est incliné, au moins dans la zone de la broche (2), par rapport à l'axe optique de la fibre optique dans la broche (2) de manière à empêcher une rétro-action de lumière dans la fibre optique.

11. Connecteur selon l'une des revendications 1 à 10, caractérisé en ce que l'élément formant fiche comporte une enveloppe de fiche (13) à section sensiblement rectangulaire.

12. Connecteur selon l'une des revendications 1 à 11, caractérisé en ce que l'élément formant alvéole (3) est une pièce centrale apte à être montée sur une paroi de boîtier, dans laquelle un élément formant fiche (1, 1') est apte à être introduit de chaque côté, et en ce que pour chaque élément formant fiche, une voie de commande propre (7, 7') est disposée dans l'élément formant alvéole.

13. Connecteur selon l'une des revendications 1 à 12, caractérisé en ce que l'élément formant fiche (1) est apte à être fixé à l'élément formant alvéole (3) à l'aide d'un dispositif d'encliquetage (11, 12).
